# EUROPEAN PATENT SPECIFICATION

(11) **EP 1 068 924 B1**
(45) Date of publication and mention of the grant of the patent: **28.12.2005**
(21) Application number: 00900900.2
(22) Date of filing: 24.01.2000
(51) Int. Cl.: B23K 35/14, B23K 20/04, F01M 5/00

(54) **BRAZING COMPOSITE MATERIAL AND BRAZED HEAT EXCHANGER**
LÖTKOMPOSITMATERIAL UND GELÖTETER WÄRMETAUSCHER
MATERIAU COMPOSITE DE BRASAGE ET ECHANGEUR DE CHALEUR BRASE

(30) Priority: 02.02.1999 JP 2456399
(43) Date of publication of application: 17.01.2001
(73) Proprietor: Neomax Materials Co., Ltd., Suita-shi, Osaka 564-0043 (JP); DENSO CORPORATION, Kariya-shi, Aichi-ken, 448-8661 (JP)
(72) Inventor: Ishio, Masaaki, Suita Works, Suita-shi, Osaka 564-0043 (JP); Hasegaewa Tsuyoshi, Suita Works, Suita-shi, Osaka 564-0043 (JP); Ueda, Masami, Suita Works, Suita-shi, Osaka 564-0043 (JP); Kajikawa, Shunji, Kariya-city, Aichi 448-8661 (JP); Sakamoto, Yoshitsugu, Kariya-city, Aichi 448-8661 (JP); Uchimura, Katsunori, Kariya-city, Aichi 448-8661 (JP)
(74) Representative: Hering, Hartmut
(86) International application number: PCT/JP2000/000331
(87) International publication number: WO 2000/045987

(56) References cited:
- GB-A- 520 365
- JP-A- 3 281 096
- JP-A- 5 065 582
- JP-A- 5 154 686
- JP-A- 5 154 688
- JP-A- 7 108 372
- JP-A- 60 115 384
- US-A- 2 779 999
- US-A- 5 422 451

## Description

This invention relates to brazed structures such as heat exchangers like radiators and gas coolers, etc., and to a brazing composite used as the base material therefore.

In recent years, in keeping with the ever-increasing international concern over environmental problems, strong pressure is being brought to bear in an effort to reduce automobile exhaust gas. As measures for purifying automobile exhaust gas, various kinds of purifier apparatuses have been practically implemented, including catalytic converters and thermal reactors that recombust the exhaust gas and turn CO and HC into CO₂ and H₂O.

Conventionally, in exhaust gas purifier apparatuses, the heat exchangers used in corrosive gas atmospheres at high temperature are formed of stainless steel which is highly resistant to corrosion. Each member of these heat exchangers is brazed together with copper brazing filler metal that exhibits good corrosion resistance and a melting point of 1000 °C or higher, or with the copper-based brazing filler metal described in Japanese Patent Laid-Open No. S60-72695/1985 published that is 5 to 20% manganese, or additionally 1 to 5% nickel, with the remainder being essentially copper.

The JP-A-5154686 discloses a clad brazing material for use in forming an oil cooler comprising an iron/steel layer of which both sides are clad with a nickel layer. Since an iron/steel layer and not a stainless steel layer is used it is necessary to use the nickel layers because the nickel layers prevent that water corrosion resistance get worse. The nickel layers was formed in order to provide an iron/steel layer with the same water corrosions resistance as a stainless steel layer. This document provides a method to replace the expansive stainless steel layer by an iron/steel layer to reduce the costs of production but the disadvantage is the bad water corrosions resistance.

More recently, the corrosive environments inside heat exchangers have become significantly more severe due to changes in the composition of exhaust gasses, and problems are arising such as corrosion induced by condensates in exhaust gasses. Hence even further improvements are demanded in brazing filler metals in terms of corrosion resistance. This demand for corrosion resistance in brazing filler metals exposed to such highly corrosive atmospheres is not only an issue for automobile exhaust gas purifying systems, but the demand is also being made in exhaust gas heat exchangers for gas turbine engines and the like, and in various kinds of brazed iron/steel structures that are exposed to highly corrosive environments.

Currently, however, brazing filler metals that thoroughly satisfy these demands for corrosion resistance are still not being supplied on the market. Even in cases where use is made of nickel brazing filler metal that exhibits good corrosion resistance, while there are no problems in high temperature environments, corrosion does advance in environments wherein the exhaust gas condenses. The reason therefore is not altogether evident, but it is conjectured that one cause could be the fact that such melting point lowering elements as boron and silicon are added to nickel brazing filler metals. Furthermore, even when use is made of Cu-Ni brazing filler alloys to which comparatively much nickel which is an element that enhances corrosion resistance has been added, adequate corrosion resistance is not realized. It is an observed effect, moreover, that corrosion resistance deteriorates as the nickel content becomes higher.

With the foregoing in view, it is an object of the present invention to provide both brazing material that can enhance the corrosion resistance of brazing filler metal section in brazed structures wherein members are brazed together that are formed by various kinds of iron/steel materials inclusive of stainless steel materials, and brazed structures such as heat exchangers which exhibit outstanding corrosion resistance at the brazing filler metal section that are exposed to corrosive atmospheres. This object is attained by the invention described below.

The brazing material of the present invention is a brazing composite for use in a heat exchanger according to claim 1 comprising a base material formed of stainless steel material, and an Fe atom diffusion suppression layer, formed by lamination on the surface of that base material, that suppresses the diffusion of Fe atoms from the base material to the brazing filler metal side when joined members are brazed together with a copper-based brazing filler metal.

As based on this invention, the Fe atom diffusion suppression layer is formed on the surface of the base material, wherefore, during brazing, before the Fe atoms in the base material can diffuse to the brazing filler metal side, they must first diffuse and move through the Fe atom diffusion suppression layer. The diffusion of Fe atoms in the Fe atom diffusion suppression layer will be solid phase diffusion, wherefore the Fe atom diffusion speed will be significantly slower than the diffusion thereof in brazing filler metal that is in a molten state. For that reason, by deploying only a very thin Fe atom diffusion suppression layer, Fe atoms can be prevented from diffusing in the brazing filler metal. As a consequence, it becomes possible for the brazing filler metal section in brazed structures to exhibit the corrosion resistance inherent in copper-based brazing filler metals, whereupon corrosion resistance is enhanced.

In this invention, the copper-based brazing filler metal layer is formed on the Fe atom diffusion suppression layer, wherein said base material, said Fe atom diffusion suppression layer and said copper-based brazing filler metal layer are mutually clad by diffused junction. It is further possible to use stainless steel to form the base material and either nickel or a nickel alloy in which nickel is the main component to form the Fe atom diffusion suppression layer. Moreover, when the base material, the Fe atom diffusion suppression layer and a copper-based brazing filler metal layer are clad together by diffused junction, it is desirable that the base material is formed of stainless steel, the Fe atom diffusion suppression layer is formed of nickel or a Ni-Cu alloy having a 90 wt% or greater nickel content with the remainder composed essentially of copper, and the copper-based brazing filler metal layer is formed of a Cu-Ni alloy having a nickel content of 2 to 15 wt%, and more preferably of 5 to 10 wt%, with the remainder composed essentially of copper. The thickness of the Fe atom diffusion suppression layer should be 5 µm or greater.

A heat exchanger in the present invention comprises plate members deployed in opposition to one another, and partitioning members that partition the spaces formed between those plate members into many partial spaces. The plate members and the partitioning members are brazed together with a copper-based brazing filler metal. The plate members have plate-form base materials formed of stainless steel, and an Fe atom diffusion suppression layer made of nickel or a nickel alloy whereof nickel is the main component, formed by lamination on the surface of the base material, for suppressing the diffusion of Fe atoms from the base material to the brazing filler metal section when the partitioning members and the plate members are being brazed together.

As based on this invention, when brazing, the Fe atoms in the base material of the plate members must first pass through the Fe atom diffusion suppression layer by solid phase diffusion, wherefore the penetration thereof by diffusion to the brazing filler metal in the molten state can be prevented merely by deploying a very thin Fe atom diffusion suppression layer. As a consequence, the brazing filler metal section in the heat exchanger that is the brazed structure can exhibit the corrosion resistance inherent in the brazing filler metal, and corrosion resistance is enhanced. The base material itself exhibits outstanding corrosion resistance, moreover, and the Fe atom diffusion suppression layer is formed of nickel or a nickel alloy the main component whereof is nickel, so that the coefficient of thermal expansion thereof will be similar to that of the stainless steel of the base material, wherefore the occurrence of thermal stress is suppressed under a wide range of temperatures, and durability of the heat exchanger can be enhanced.

Moreover, a heat exchanger of the present invention in accordance with independent claims 4 and 8 comprises a first concavo-convex member wherein first concavities and first convexities are formed so that they alternate, and a second concavo-convex member, deployed in opposition to the first concavo-convex member, wherein second concavities and second convexities are formed so that they alternate. The outer surfaces of the first concavities in the first concavo-convex member are brazed to the outer surfaces of the second convexities in the second concavo-convex with a copper-based brazing filler metal. The first concavo-convex member and the second concavo-convex member has a base material formed of each stainless steel, and an Fe atom diffusion suppression layer consisting of nickel or a nickel alloy whereof nickel is the main component, formed by lamination on the surface of the base material, for suppressing the diffusion of the Fe atoms from the base material to the brazing filler metal section when the first concavities and the second convexities are brazed together.

As based on this invention, when brazing, the Fe atoms in the base materials of the first concavo-convex member and second concavo-convex member must first pass by solid state diffusion through the Fe atom diffusion suppression layers of each member, wherefore the penetration by diffusion thereof into the brazing filler metal in the molten state is prevented merely by deploying very thin Fe atom diffusion suppression layers on each base material. As a consequence, the brazing filler metal section in the heat exchanger that is the brazed structure can exhibit the corrosion resistance inherent in the brazing filler metal, and corrosion resistance is enhanced. The base material itself exhibits outstanding corrosion resistance, moreover, and the Fe atom diffusion suppression layers are formed of nickel or a nickel alloy the main component whereof is nickel, so that the coefficient of thermal expansion thereof will be similar to that of the stainless steel of the base material, wherefore the occurrence of thermal stress is suppressed under a wide range of temperatures, and durability of the heat exchanger can be enhanced.

In the heat exchanger described above, by forming the copper-based brazing filler metal of a Cu-Ni alloy having a nickel content of from 5 to 10 wt% and the remainder consisting essentially of copper, and forming the Fe atom diffusion suppression layers of nickel or a Ni-Cu alloy having a nickel content of 90 wt% or greater and the remainder consisting essentially of copper, the corrosion resistance of the brazing filler metal section is enhanced.

### BRIEF DESCRIPTION OF THE DRAWINGS

Fig. 1 is a partial section of a brazing composite relating to an embodiment aspect of the present invention;
Fig. 2 is a distribution diagram of the Fe concentration and Ni concentration from the base material interface to the brazing filler metal layer surface when a brazing composite wherein a copper-based brazing filler metal layer is formed of pure copper is held at 1100 °C for 10 minutes;
Fig. 3 is a distribution diagram of the Fe concentration and Ni concentration from the base material interface to the brazing filler metal layer surface when a brazing composite wherein a copper-based brazing filler metal layer is formed of a Cu - 2 wt% Ni alloy is held at 1150°C for 10 minutes;
Fig. 4 is a distribution diagram of the Fe concentration and Cu concentration from the base material interface to the brazing filler metal layer surface when a brazing composite wherein a copper-based brazing filler metal layer is formed of a Cu - 5 wt% Ni alloy is held at 1150°C for 10 minutes;
Fig. 5 is a distribution diagram of the Fe concentration and Ni concentration from the base material interface to the brazing filler metal layer surface when a brazing composite wherein a copper-based brazing filler metal layer is formed of a Cu - 10 wt% Ni alloy is held at 1150 °C for 10 minutes;
Fig. 6 is a distribution diagram of the Fe concentration and Ni concentration from the base material interface to the brazing filler metal layer surface when a brazing composite wherein a copper-based brazing filler metal layer is formed of a Cu - 20 wt% Ni alloy is held at 1200 °C for 10 minutes;
Fig. 7 is a diagram that plots the relationship between the nickel content and the corrosion reduction ratio in a Cu-Ni brazing filler alloy;
Fig. 8 is a distribution diagram for the Fe concentration from the base material surface in the plate thickness direction of an Fe atom diffusion suppression layer when the brazing composite relating to an embodiment is held at 1100 °C for 10 minutes;
Fig. 9 is a distribution diagram for the Fe concentration from the base material surface in the plate thickness direction of an Fe atom diffusion suppression layer when the brazing composite relating to an embodiment is held at 1050 °C for 10 minutes;
Fig. 10 is a distribution diagram for the Fe concentration from the base material surface in the plate thickness direction of an Fe atom diffusion suppression layer when the brazing composite relating to an embodiment is held at 1000 °C for 10 minutes;
Fig. 11 is a distribution diagram for the Fe concentration from the base material surface in the plate thickness direction of a brazing filler metal layer when the brazing composite relating to a comparative example wherein no Fe atom diffusion suppression layer has been formed is held at 1100 °C for 10 minutes;
Fig. 12 is a partial diagonal view of a heat exchanger relating to a first embodiment aspect;
Fig. 13 is a partial section of a heat exchanger relating to a second embodiment aspect;
Fig. 14 provides a partial section and enlarged partial section of a concavo-convex brazing composite used in the manufacture of the heat exchanger in the second embodiment aspect; and
Fig. 15 is a diagram of the condition of a Cu-Ni binary alloy.

The inventors investigated the causes of deterioration in corrosion resistance in brazing filler metal section in a brazed structure wherein members formed of stainless steel to be joined together are brazed together with a copper-based brazing filler metal. They learned, as a result, that when the brazing is done at a high temperature exceeding 900 °C, Fe atoms diffuse from the iron/steel material and penetrate into the brazing filler metal that has been melted, and that, because the Fe atoms diffuse as far as the surface of the brazing filler metal section, the corrosion resistance of those brazing filler metal section deteriorates such that the corrosion resistance inherent in the copper-based brazing filler metal prior to the brazing together cannot be exhibited. More specifically, because iron corrodes more readily than does copper, and because the Fe and Cu form local batteries, the corrosion resistance in the brazing filler metal section will deteriorate and become inferior to the corrosion resistance inherent in the copper-based brazing filler metal used in doing the brazing. For this reason, when a brazing filler metal section is exposed to a corrosive atmosphere after brazing and the diffusion and penetration thereinto by the Fe, that section will corrode readily. Now, the alloy elements in the stainless steel material, such as the nickel or chromium in stainless steel, for example, will diffuse to the brazing filler metal during brazing. However, nickel enters into solid solution with copper and so does not impair corrosion resistance, and chromium diffuses at a slower speed than does iron, and, probably for that reason, does not diffuse so much as to impair corrosion resistance. The present invention was perfected on the basis of these findings.

The present invention is herebelow described in detail as based on embodiment aspects.

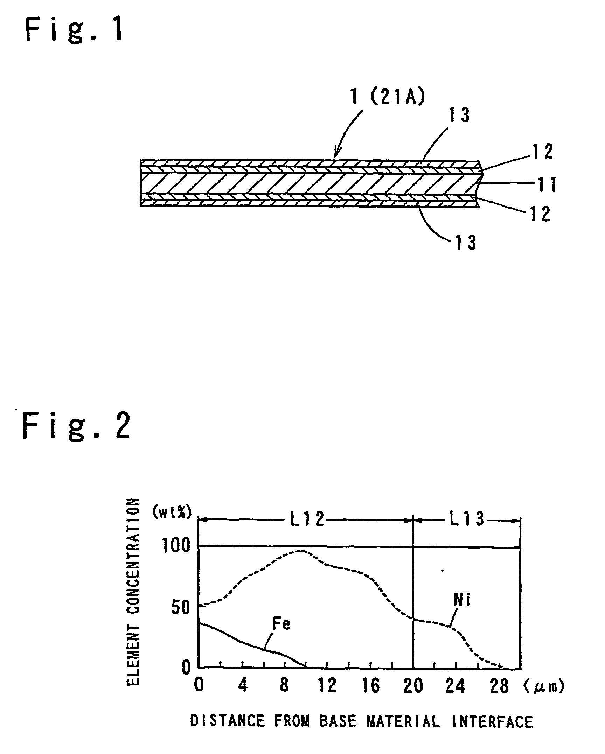

Fig. 1 represents a brazing composite 1 relating to an embodiment aspect of the present invention. To both sides of a plate-form base material 11 are formed Fe atom diffusion suppression layers 12 and 12, and thereon are formed copper-based brazing filler metal layers 13 and 13.

The base material 11 is formed of stainless steel exhibiting good corrosion resistance.

The Fe atom diffusion suppression layer 12 can be formed of a metal that does not contain iron, that has a higher melting point than the brazing filler metal, that enters into solid solution with copper, and hence that is a metal which does not generate precipitates that readily form starting points for corrosion. Examples of metals that can be used are pure nickel or nickel alloys wherein nickel is the main component constituting 50 wt% or more. In accordance with the claims, the nickel alloys that are used are nickel-copper alloys or nickel-chromium alloys. If plastic machinability is to be considered, in a nickel-chromium alloy the nickel content should be 70 wt% or greater. The nickel alloys, moreover, in addition to such alloyed elements as chromium, as mentioned, may contain supplemental elements that enhance the mechanical and/or chemical properties of the alloy without impairing the basic properties thereof. When the Fe atom diffusion suppression layer is formed of a metal having a high melting point, although it is very difficult to pressure-bond such a metal to the base material by a cladding method, such can be formed on the surface of the base material by flame spray coating, PVD, or CVD.

With the base material 11 formed of stainless steel, the Fe atom diffusion suppression layer 12 is formed of pure nickel or a nickel alloy (both of which are sometimes referred to as nickel-based metals). Because the coefficients of thermal expansion of stainless steel and nickel are proximate, by forming the Fe atom diffusion suppression layers 12 of a nickel-based metal, the occurrence of thermal stress at the junctions between the Fe atom diffusion suppression layers 12 and the base material 11 can be suppressed under a wide range of temperatures, whereupon the corrosion resistance at the junctions can be enhanced. It is noted in passing that the coefficient of thermal expansion at 30 to 600°C is 18.3 × 10⁻⁶/K for the nickel-chromium stainless steel conforming to the JIS standard SUS304, 11.8 × 10⁻⁶/K for the chromium-based stainless steel conforming to SUS430, and 15.4 × 10⁻⁶/K for nickel, but only 5.7 × 10⁻⁶/K for molybdenum and only 4.6 × 10⁻⁶/K for tungsten. The upper limit of the temperatures at which an exhaust gas heat exchanger can be used is ordinarily about 600 °C.

For the copper-based brazing filler metal layer 13, various commonly known copper-nickel alloys made for brazing filler metals can be used in accordance with the claims. The brazing temperature may be any temperature equal to or higher than the melting point of the copper-based brazing filler metal and lower than the melting point of the metal forming the Fe atom diffusion suppression layers, but is usually made on the copper-based brazing filler metal melting point + 20 °C or so. By using a copper-based brazing filler metal having a melting point of 880 to 1180 °C or so, the brazing temperature can be made on the order of 900 to 1200 °C, and iron/steel materials containing stainless steel can be simultaneously annealed and brazed by heating for from several to several tens of minutes.

With this brazing composite 1, because the copper-based brazing filler metal layers 13 are formed on the Fe atom diffusion suppression layers 12, when performing a brazing operation, there is no need for complex operations such as interposing a separately prepared brazing filler metal between the joined members that are what are being brazed together, wherefore outstanding brazing property is afforded and productivity can be improved.

To be sure, if the base material 11 and the Fe atom diffusion suppression layers 12 are clad by diffused junction, there will be no problem with pinholes developing as with plating, and, after pressing down the both materials, both materials can easily be integrated by diffusion annealing, whereupon outstanding industrial productivity is afforded. Furthermore, by merely adjusting the draft when pressing, the thickness of the Fe atom diffusion suppression layers 12 can be easily controlled. When forming the copper-based brazing filler metal layers 13 on the Fe atom diffusion suppression layers 12, moreover, by stacking the materials, namely the base material 11, the Fe atom diffusion suppression layers 12 and the copper-based brazing filler metal layers 13, pressing down them and performing diffusion annealing, the respective adjacent members can easily be clad.

In accordance with claims 1 to 4, when the base material 11, Fe atom diffusion suppression layers 12, and copper-based brazing filler metal layers 13 are to be clad, the Fe atom diffusion suppression layers 12 are formed of pure nickel or a Ni-Cu alloy having a nickel content of 90 wt% or greater with the remainder composed essentially of copper, and the copper-based brazing filler metal layers are formed of a Cu-Ni alloy having a nickel content of 5 to 10 wt% with the remainder composed essentially of copper. When an Fe atom diffusion suppression layer 12 having a high nickel concentration of 90 wt% or greater and a copper-based brazing filler metal layer 13 having a high concentration of copper exceeding 98 wt% are clad together, voids develop in the vicinity of the junction interface due to the Kirkendall effect, and there is a danger of the dimensional precision of the brazing composite being compromised. When the nickel content in the copper-based brazing filler metal layer 13 exceeds 15 wt%, the melting point of the brazing filler metal will exceed 1200 °C, whereupon the heating temperature during brazing will become too high.

By making the nickel content in the copper-based brazing filler metal layer 5 wt% or greater, the Kirkendall effect can be prevented from occurring, and the melting point of the brazing filler metal will be in excess of 1100 °C, wherefore the annealing temperature for the brazing composite after cladding can be raised to near or higher than the melting point of pure copper (1083 °C). By raising the annealing temperature, the base material can be adequately softened, wherefore formability and workability of the brazing composite can be improve, even when stainless steel is used for the base material 11. By making the nickel content 10 wt% or less, on the other hand, the melting point of the brazing filler metal will be 1180 °C or lower, making it possible to conduct brazing at or below a temperature of 1200 °C or so. By making the nickel content in the Cu-Ni alloy from 5 to 10 wt%, moreover, when the members being joined are being brazed, nickel will diffuse in suitable quantity from the Fe atom diffusion suppression layers 12 containing a high concentration of nickel to the brazing filler metal that is in a molten state, whereupon the nickel content of the brazing filler metal section after brazing will be on the order of 15 to 25 wt%. Brazing filler metal section that consist of this Cu-Ni alloy will excel in corrosion resistance, and can therefore exhibit outstanding corrosion resistance even against exhaust gas condensates.

In order to verify the effectiveness of enhancing corrosion resistance when forming the copper-based brazing filler metal layer of a Cu-Ni alloy containing 5 to 10 wt% of nickel and with the remainder composed essentially of copper, corrosion resistance was studied using the brazing composites relating to Embodiments 1 to 5 described below.

The brazing composite of Embodiment 1 used in the studies was fabricated by laminating nickel foil (Fe atom diffusion suppression layer material) of 100 µm thickness on a stainless steel plate (material of the base material) of 2000 µm thickness formed of stainless steel conforming to the JIS SUS304 standard, onto which was further laminated pure copper foil as a copper-based foil (copper-based brazing filler metal layer material) of 50 µm thickness. These components were then pressure-bonded under roller pressure with a draft of 60%, diffusion annealing was administered for 3 minutes at 1050 °C, and roller pressure was again applied with a draft of 50%. In Embodiments 2 to 5, only the composition of the copper-based foil differs from the fabrication conditions for Embodiment 1. The compositions of the copper-based foils in Embodiments 2 to 5 are given below together with that for Embodiment 1. The composites in each of the fabricated embodiments has a thickness of 430 µm with the thickness of the base material being 400 µm, of the Fe atom diffusion suppression layer (nickel layer) being 20 µm , and of the copper-based brazing filler metal layer being 10 µm. When the external appearances of the fabricated brazing composites were examined, localized swellings were observed here and there in the surface in Embodiment 1 wherein the copper-based brazing filler metal layer was formed of pure copper.
Embodiment 1: Pure copper
Embodiment 2: Cu - 2 wt% Ni alloy
Embodiment 3: Cu - 5 wt% Ni alloy
Embodiment 4: Cu - 10 wt% Ni alloy
Embodiment 5: Cu - 20 wt% Ni alloy

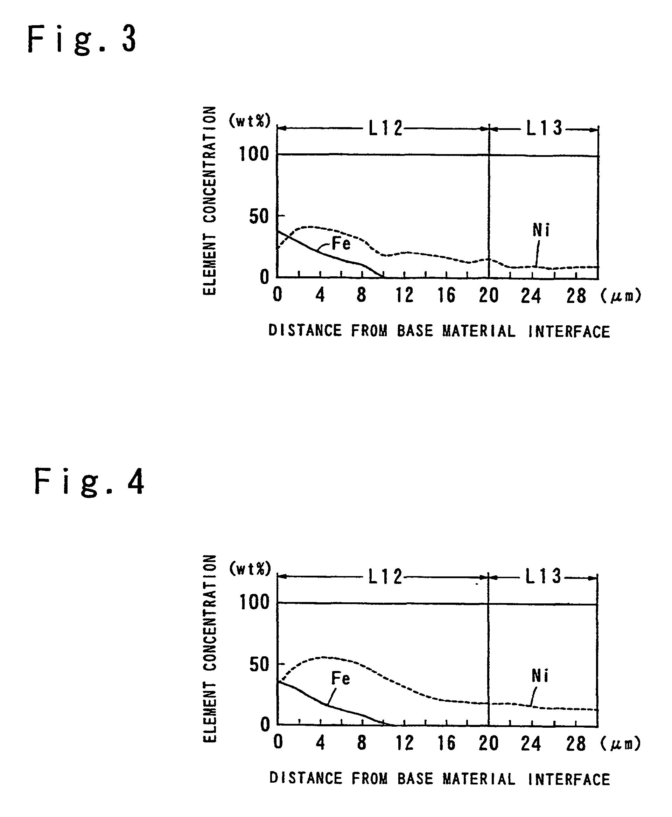

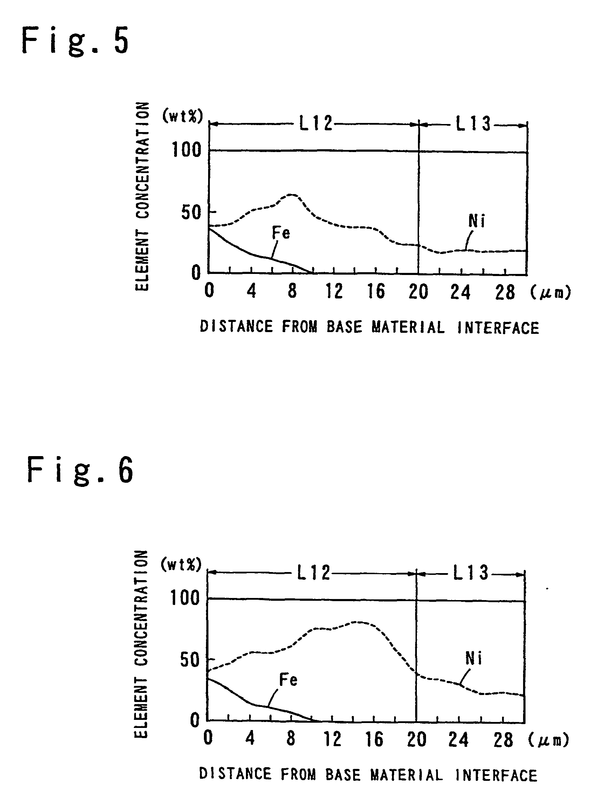

The brazing composites relating to the five different embodiments fabricated as described above were heated in a vacuum heating oven under the heating conditions (heating temperature × holding time) indicated in Studies 1 to 5 below, and cooled to room temperature. Then the nickel and iron quantities at each site were measured with an electron probe microanalyser (EPMA), in the Fe atom diffusion suppression layer, and in the brazing filler metal layer after solidification, in the thickness direction, from the interface with the base material. The results are plotted in Fig. 2 to 6. In these figures, L12 and L13 connote the Fe atom diffusion suppression layer and brazing filler metal layer after heating and cooling. The particulars noted for the numbered studies listed below are given in the order of type of brazing composite used, heating conditions, and measurement results.
(1) Study No. 1: Embodiment 1, 1100 °C × 10 min, Fig. 2
(2) Study No. 2: Embodiment 2, 1150 °C × 10 min, Fig. 3
(3) Study No. 3: Embodiment 3, 1150 °C × 10 min, Fig. 4
(4) Study No. 4: Embodiment 4, 1150 °C × 10 min, Fig. 5
(5) Study No. 5: Embodiment 5, 1200 °C × 10 min, Fig. 6

In Fig. 2, representing the case where the copper-based brazing filler metal layer is formed of pure copper, it may be seen that the nickel content is about 5 wt% or lower in the surface layer portion extending for about 5 µm from the surface in the brazing filler metal layer L13 after heating. As may also be seen, the nickel content in the brazing filler metal layer L13 in Fig. 3 representing the case where the copper-based brazing filler metal layer is formed of Cu - 2 wt% Ni alloy is about 10 wt%, is at least 15 wt% or so in Fig. 4 representing the case where that layer is formed of Cu - 5 wt% Ni alloy, is about 20 wt% in Fig. 5 representing the case where that layer is formed of Cu - 10 wt% Ni alloy, and is about 30 wt% in Fig. 6 representing the case where that layer is formed of Cu - 20 wt% Ni alloy. The iron content, on the other hand, was roughly 0% at 10 µm or so from the base material interface in the Fe atom diffusion suppression layer L12 in every case, despite the fact that the heating temperature was comparatively high, and no Fe atoms were found in the brazing filler metal layer L13.

Next, in order to investigate brazing filler metal layer corrosion resistance in the embodied composites after heating, brazing filler metals were prepared of pure copper, Cu - 10 wt% Ni alloy, Cu - 20 wt% Ni alloy, and Cu - 30 wt% Ni alloy, and the corrosion resistance was investigated by conducting corrosion tests. In terms of the corrosive environments produced by exhaust gasses, it is necessary to consider both the dew point corrosion environment that constitutes a problem mainly when the engine is stopped, and the high temperature corrosion environment that is a problem mainly when the engine is running. Because it is the former type of corrosion resistance that is particularly problematic, however, the corrosion tests were conducted under conditions for the former, namely the dew point corrosion environment. In these corrosion tests, simulated condensate solutions having the compositions noted below and simulating exhaust gas condensates were prepared. Then the brazing filler metals described earlier were immersed for 500 hours in those simulated condensate solutions at 100 °C, and the mass of brazing filler metal lost as a result of that immersion (i.e. corrosion loss) was measured.
- Simulated condensate solution composition (pH 4.4) Cl⁻: 20 ppm, SO₄²⁻: 350 ppm, NO₃⁻: 150 ppm, NH₄⁺: 700 ppm, formic acid: 500 ppm, acetic acid: 700 ppm

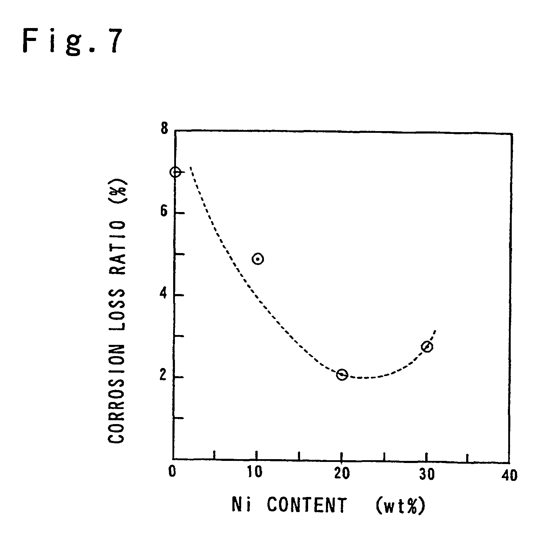

The results of these corrosion tests are plotted in Fig. 7. In this graph, the values plotted on the vertical axis are corrosion loss ratios found by dividing the corrosion loss by the brazing filler metal mass prior to immersion. It is apparent from Fig. 7 that optimal corrosion resistance is realized when the nickel content ranges from 15 to 25 wt% or so. Thus it will be understood that, for the copper-based brazing filler metal layers in the brazing composites in the embodiments described in the foregoing, particularly outstanding corrosion resistance is exhibited by Embodiment 3 wherein Cu - 5 wt% Ni alloy is used and by Embodiment 4 wherein Cu - 10 wt% Ni alloy is used.

Next, a detailed description is given concerning the thickness of the Fe atom diffusion suppression layer 12 in the brazing composite 1.

In cases where stainless steel members are brazed together, it is preferable that the brazing temperature be set between 1000 and 1200 °C in order that the stainless steel members can also be annealed during brazing. Even when the brazing is done at such a high temperature, it is still possible, by making the thickness of the Fe atom diffusion suppression layer 12 5 µm or greater, and preferably 8 µm or greater, to prevent, to a considerably degree, the diffusion and penetration of Fe atoms from the base material 11 to the brazing filler metal side, and thus to enhance the corrosion resistance of the brazing filler metal section. By making that thickness 10 µm or greater, which is even more preferable, the diffusion of Fe atoms to the brazing filler metal side can be blocked almost completely even at a high temperature around 1200 °C, as is evident from Fig. 2 to 6. Needless to say, even in cases where the base material is formed of some iron/steel material other than stainless steel, effectiveness in annealing the base material and suppressing Fe atom diffusion can still be realized, as in the case where the base material is formed of stainless steel material, by making the thickness of the Fe atom diffusion suppression layer 5 µm or greater, but preferably 8 µm or greater, and even more preferably 10 µm or greater, and brazing at a temperature of 1000 to 1200 °C.

The relationship between the thickness of the Fe atom diffusion suppression layer and Fe atom diffusion suppression effectiveness is now described more concretely based on heating tests, which simulated brazing.

The embodied brazing composite used in the heating tests was made by laminating nickel foil (Fe atom diffusion suppression layer material) of 200 µm thickness on a stainless steel plate (material of the base material) of 1050 µm thickness formed of stainless steel conforming to the JIS SUS304 standard, onto which was further laminated copper-based foil for example a copper-based brazing filler metal layer material of 250 µm thickness. These components were then pressure-bonded under roller pressure with a draft of 60%, diffusion annealing was administered for 10 minutes at 800 °C, and roller pressure was again applied with a draft of 30%. The overall thickness of the composite fabricated thus was 420 µm , with the base material having a thickness of 300 µm, the Fe atom diffusion suppression layer (nickel layer) of 50 µm, and the copper-based brazing filler metal layer of 70 µm. For a comparative example, meanwhile, a brazing composite was prepared wherein the copper-based brazing filler metal layer was formed directly onto the base material, without forming an Fe atom diffusion suppression layer 12. The composition and thickness of the base material in this comparative example were the same as in the embodiment, Cu - 36 wt% Mn - 36.5 wt% Ni alloy was used for the copper-based brazing filler metal, and the thickness thereof was made the same 70 µm as in the embodiment.

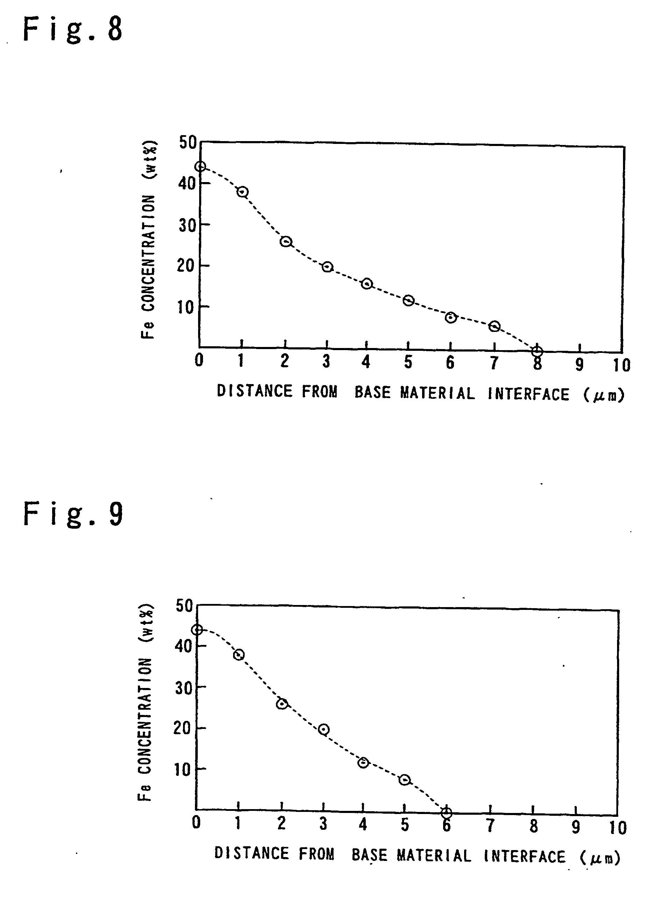

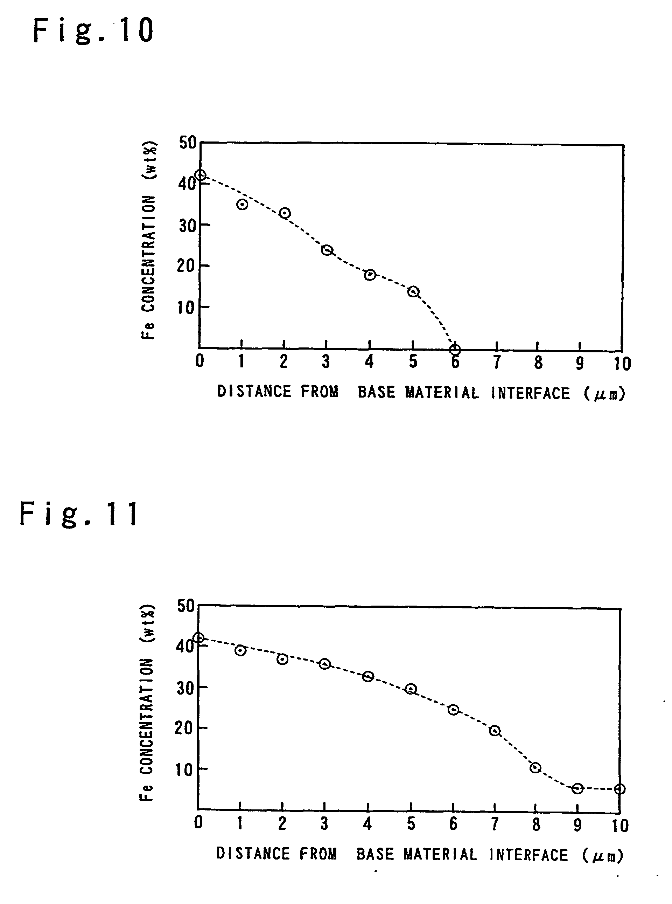

The brazing composites of the embodiment and the comparative example were heated in a vacuum heating oven under the heating conditions (heating temperature × holding time) indicated in Studies No. 11 to 14 below. After radiation cooling to room temperature, the Fe quantities at each site were measured with an EPMA, from the base material interface, in the thickness direction of the Fe atom diffusion suppression layer (in the case of the embodiment) or brazing filler metal layer (in the case of the comparative example). The results are plotted in Fig. 8 to 11. The particulars cited in the numbered studies below are given in the order of the type of composite used, the heating conditions, and the measurement results.
(1) Study No. 11: Embodiment, 1100 °C × 10 min, Fig. 8
(2) Study No. 12: Embodiment, 1050 °C × 10 min, Fig. 9
(3) Study No. 13: Embodiment, 1000 °C × 10 min, Fig. 10
(4) Study No. 14, Comparative example, 1100 °C × 10 min, Fig. 11

As is indicated in Fig. 11, in the comparative example, the Fe concentration gradually declined from 42 wt% to 6 wt% from the base material interface to 9 µm , after which the same concentration was sustained out to the surface of the brazing filler metal layer. In contrast therewith, in the embodiment, the Fe concentration was 42 to 44 % at the base material interface, but the Fe concentration in the Ni layer became 0% at 6 µm from the interface (in the cases represented in Fig. 9 and 10) and at 8 *µ*m therefrom (in the case represented in Fig. 8). From this it is understood that the quantity of Fe atoms penetrating by diffusion into the brazing filler metal layer is sharply reduced merely by deploying an Fe atom diffusion suppression layer 12 at a thickness of about 5 *µ*m It is also understood that, at or below a heating temperature of 1100 °C or so, the diffusion penetration of Fe atoms from the base material to the copper-based brazing filler metal layer can be blocked by forming an Fe atom diffusion suppression layer 13 of 8 *µ*m thickness or greater. Accordingly, with the brazing composite 1 of the embodiment, or a brazed structure assembled by brazing using the same, the diffusion penetration of Fe atoms in the base material 11 to the brazing filler metal side can be sharply reduced merely by forming an exceedingly thin Fe atom diffusion suppression layer 12 on the base material 11, whereupon the inherent corrosion resistance of the copper-based material is exhibited.

In the foregoing, the brazing composite of the present invention has been described in terms of embodiment aspects, but the present invention is not to be interpreted as being limited thereto or thereby.

In the embodiment aspects described in the foregoing, for example, the Fe atom diffusion suppression layer 12 and the copper-based brazing filler metal layer 13 are formed on both sides of the base material 11, but these may be laminated on only one side of a base material by which members being joined are brazed together.

In the embodiment aspects described in the foregoing, moreover, a copper-based brazing filler metal layer 13 is clad in addition to the Fe atom diffusion suppression layer 12, but the copper-based brazing filler metal layer 13 is not always necessary. In such cases where it is not necessary, brazing may be done after a separately prepared copper-based brazing filler metal has been interposed between the brazing composite and the members being joined.

Next, an embodiment aspect is described for a brazed structure wherein the brazing composite 1 relating to the embodiment aspects described above is used as a material.

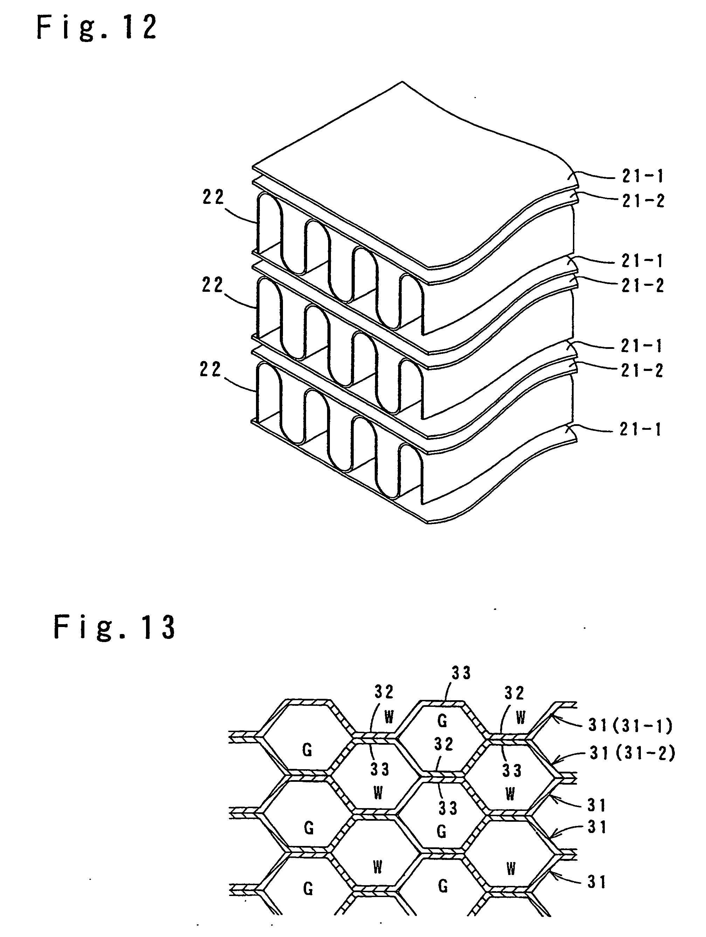

Fig. 12 is a diagonal view of a flow path structure in a heat exchanger relating to a first embodiment aspect. Sets of plate members 21-1 and 21-2 that are deployed so as to face each are deployed in a plurality, in parallel, mutually separated at a prescribed interval. In two sets of plate members mutually adjacent to each other, between the lower plate member 21-2 of the upper set, and the upper plate member 21-1 below that upper set that is deployed in opposition to that plate member 21-2, are interposed corrugated partitioning members (also called fins) 22 that are bent and molded such that they have a waveform cross-section, as diagrammed. The spaces between the plate members 21-1 and 21-2 in each of the sets are made medium flow paths wherein flow a heat exchanging medium such as cooling water. The numerous sectioned spaces partitioned by the partitioning member 22 between the lower plate members 22-2 of the upper sets and the upper plate members 21-1 of the lower sets are made gas flow paths wherein flow a high temperature corrosive gas such as exhaust gas. In some cases, when the plate members 21-1 and 21-2 in one set are not distinguished, descriptions are made wherein the symbol 21 is used for the plate members.

In the partitioning members 22, the uppermost parts of the waveform convexities and the lower surfaces of the plate members 21-2 on the upper side that sandwich and support those partitioning members 22 are brazed together with a copper-based brazing filler metal, and the lowermost parts of the waveform concavities and the upper surfaces of the plate members 21-1 on the lower side that sandwich and support those partitioning members 22 are brazed together with a copper-based brazing filler metal.

The material used for the plate members 21 in this heat exchanger is a plate-form brazing composite member 21A resulting from making the brazing composite 1 having the structure diagrammed in Fig. 1 into a suitable size. To facilitate the description, this plate-form brazing composite member 21A is also described with reference to Fig. 1. The plate-form brazing composite member 21A is made by cladding, by diffused junction, both sides of a thin plate-form base material 11 formed of Austenite stainless steel (JIS SUS304 stainless steel) excelling in resistance to corrosion and to acids, with Fe atom diffusion suppression layers 12 consisting of nickel layers and copper-based brazing filler metal layers 13, formed thereon, consisting of Cu - 8 wt% Ni alloy. The partitioning members 22, on the other hand, are made by working thin sheet made of the stainless steel noted above into a waveform shape.

In order to assemble the heat exchanger using the plate-form brazing composite members 21A and the partitioning members 22 described in the foregoing, the partitioning members 22 and the plate-form brazing composite members 21A are alternately stacked, laminating and implementing shape retention as diagrammed in Fig. 12, and this is subjected to heating, in a vacuum or reducing gas atmosphere, for from several to several tens of minutes, at a temperature that is less than the melting point of the Fe atom diffusion suppression layer 12 but equal to or higher than the melting point of the copper-based brazing filler metal layer 13, and preferably within the range of 1100 to 1200 °C. When that is done, the copper-based brazing filler metal layers 13 of the plate-form brazing composite members 21A are fused, and the partitioning members 22 are brazed to the base material 11 through the Fe atom diffusion suppression layers 12.

The brazing filler metal section wherein the copper-based brazing filler metal layers 13 first melt during brazing and then solidify exhibit outstanding corrosion resistance due to the fact that corrosion resistance deterioration caused by Fe atom diffusion is prevented because the Fe atoms are prevented from diffusing from the base material 11 and becoming mixed into the copper-based brazing filler metal during brazing by the Fe atom diffusion suppression layers 12. When the copper-based brazing filler metal layers 13 are formed of the Cu-Ni alloy described above, in particular, a suitable quantity of nickel will diffuse from the nickel layers and become mixed into the brazing filler metal section during brazing, wherefore the corrosion resistance exhibited by the brazing filler metal section is exceptionally outstanding.

The plate-form brazing composite members 21A which were actually used in the manufacture of the heat exchanger were fabricated by laminating nickel foil (Fe atom diffusion suppression layer material) of 200 µm thickness on a stainless steel plate (material of the base material) of 1050 µm thickness formed of stainless steel, and further laminating copper-based foil (copper-based brazing filler metal layer material) made of a Cu-Ni alloy of 250 µm thickness. These components were then pressure-bonded under roller pressure with a draft of 60%, diffusion annealing was administered for 10 minutes at 800 °C, and roller pressure was again applied with a draft of 30%. The overall thickness of the plate-form brazing composite member 1 fabricated thus was 420 µm , with the base material 11 having a thickness of 300 µm, the Fe atom diffusion suppression layer (nickel layer) 12 of 50 µm, and the copper-based brazing filler metal layer 13 of 70 µm. For the partitioning members, on the other hand, thin stainless steel sheet of a thickness of 200 µm was used. In terms of brazing conditions, the temperature was held at 1150 °C for 10 minutes when formed of the Cu-Ni alloy noted above. These dimensions are given as one example, and members of suitable dimensions are used depending on the specifications of the heat exchanger.

Fig. 13 is a section of a flow path structure in a heat exchanger relating to a second embodiment aspect. This flow path structure constitutes a honeycomb structure, configured with a plurality of concavo-convex members 31 wherein trapezoidal concavities 32 and convexities 33 are mutually formed into a continuous waveform shape stacked in the vertical direction. To facilitate the description, the symbols 31-1 and 31-2 are applied to each pair of concavo-convex members deployed adjacently in the vertical. The vertically adjacent concavo-convex members 31-1 and 31-2 have the outer surfaces (lower surfaces) of the concavities 32 of the waveform member 31-1 on the upper side and the outer surfaces (upper surfaces) of the convexities 33 of the concavo-convex member 31-2 on the lower side mutually brazed together. Meanwhile, many spaces having hexagonal cross-sections are formed between the convexities 33 of the upper concavo-convex 31-1 and the concavities 32 of the lower concavo-convex 31-2. These spaces are made gas flow paths G through which flow a high temperature corrosive gas such as exhaust gas, and medium flow paths W through which flow a heat exchanging medium such as cooling water. In the example diagrammed, the gas flow paths G and the medium flow paths W are deployed to the left and right of each other.

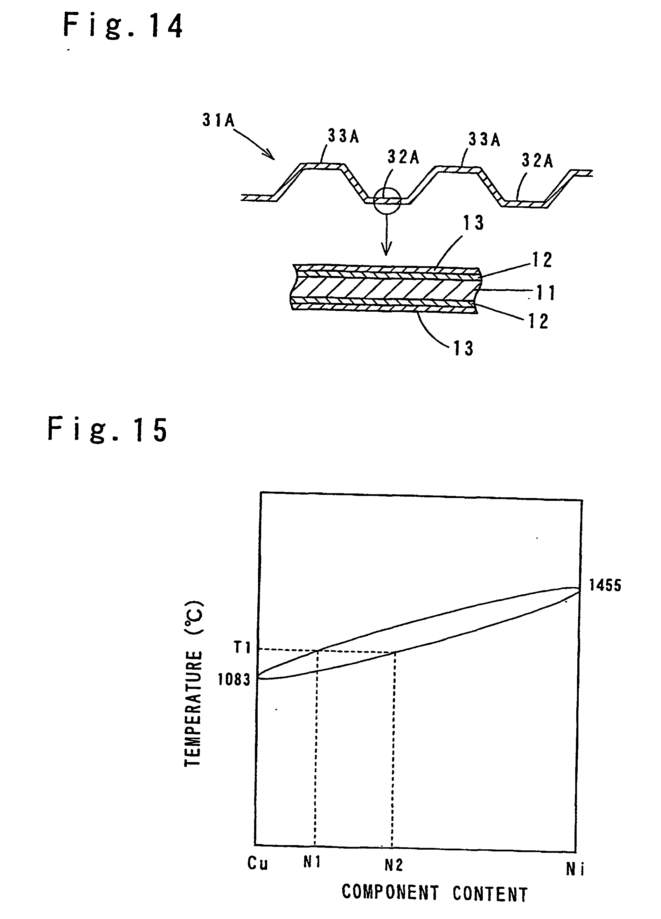

For the material of the concavo-convex members 31 in the heat exchanger described above, concavo-convex brazing composite members 31A are used wherein the brazing composite 1 having the cross-sectional structure diagrammed in Fig. 1 is formed into a concavo-convex shape of suitable size, as diagrammed in Fig. 14. To facilitate the description, the same components in this concavo-convex brazing composite member 31A as in the brazing composite 1 described earlier are indicated by the same symbols. The concavo-convex brazing composite member 31A, in like manner as in the first embodiment aspect, have both sides of a thin plate-form base material 11 formed of JIS specification SUS304 stainless steel cladded, by diffused junction, with Fe atom diffusion suppression layers 12 consisting of nickel layers and, thereon, copper-based brazing filler metal layers 13 consisting of pure copper.

In order to assemble the heat exchanger using the concavo-convex brazing composite members 31A described in the foregoing, the lower plate portions 32A of upper concavo-convex brazing composite members 31A and the upper plate portions 33A of lower concavo-convex brazing composite members 31A are stacked in laminar fashion as diagrammed in Fig. 13, and this is heated in a vacuum or reducing gas atmosphere at a suitable temperature T1 that is equal to or higher than the melting point of copper but less than the melting point of nickel. Thereby the copper-based brazing filler metal layers 13 and 13 of the concavo-convex brazing composite members 31A and 31A deployed in vertical opposition are brazed together such that they fuse together and integrate. When this is being done, due to the effect of the Fe atom diffusion suppression layers 12, the diffusion of Fe atoms from the base material 11 of the concavo-convex brazing composite member 31A (i.e. the concavo-convex member 31) to the brazing filler metal is suppressed, and the corrosion resistance of the brazing filler metal section that have once melted and then solidified is prevented from deteriorating.

Changes in the composition of brazing filler metal and brazing temperatures are now described. Fig. 15 is a Cu-Ni binary alloy state diagram. When heating and holding at T1 in the diagram, the quantity of nickel in the brazing filler metal can be controlled in the range of N1 to N2 by varying the holding time. The more nickel melts into the brazing filler metal from the nickel layer, up to 20 wt% or so, the more will the corrosion resistance of the brazing filler metal section after brazing be improved, but the thickness of the nickel layer will continue to decrease. Strictly speaking, the thickness of the nickel layer that is the Fe atom diffusion suppression layer 12 is determined with reference to the amount of this decrease. Industrially speaking, however, because the holding time during brazing at 1000 to 1200 °C or so is on the order of several tens of minutes, which is a relatively short time, the nickel layer is recommended to be formed to a thickness of about 5 µm or greater, but preferably to about 10 µm or greater. By forming the copper-based brazing filler metal layer of Cu - 5 to 10 wt% Ni alloy, moreover, brazing filler metal section that exhibit outstanding corrosion resistance can be formed even with a short brazing time.

The brazed structure of the present invention is not to be understood to be limited to or by the heat exchangers of the first and second embodiment aspects. Nor is the heat exchanger to be understood to be limited to or by the embodiment aspects described above.

For example, the number of laminating stages in the plate members 21 of the first embodiment aspect and the number of laminating stages in the concavo-convex members 31 in the second embodiment aspect can be freely established according to need. Also, the various materials described in conjunction with the brazing composite 1 can be used for the Fe atom diffusion suppression layers 11 and copper-based brazing filler metal layers 13 that configure the plate-form brazing composite members 21A and the concavo-convex brazing composite members 31A used in the manufacture of the heat exchangers of the first and second embodiment aspects.

In the first embodiment, moreover, the thickness of the Fe atom diffusion suppression layer 12 was made 50 µm, but it is only necessary that the Fe atoms in the base material 11 do not diffuse to the copper-based brazing filler metal during brazing, and the thickness of the Fe atom diffusion suppression layer 12 may be set at 5 µm or so or greater, but preferably at 8 µm or so or greater, and even more preferably at 10 µm or so or greater.

In the first embodiment aspect, furthermore, thin stainless steel sheet was used for the partitioning members 22, but the partitioning members may also be material wherein an Fe atom diffusion suppression layer is formed on a base material of thin stainless steel sheet, or, as diagrammed in Fig. 1, material wherein copper-based brazing filler metal layers are formed on the Fe atom diffusion suppression layers. By forming the Fe atom diffusion suppression layer or layers, Fe atoms can be prevented from diffusing from the base material of the partitioning members and penetrating into the molten brazing filler metal during brazing, and the corrosion resistance of the brazing filler metal section wherewith the partitioning members are brazed together can be even better prevented from deteriorating.

In the first and second embodiment aspects, moreover, the brazing composite members 21A and 31A were clad with a copper-based brazing filler metal layer 13 in addition to the Fe atom diffusion suppression layer 12, but that copper-based brazing filler metal layer 13 is not always necessary. In such a case where no copper-based brazing filler metal layer 13 is provided, a separately prepared copper-based brazing filler metal may be interposed between the plate-form brazing composite members and the partitioning members, or between the concavo-convex brazing members, and then brazed.

In the first and second embodiment aspects, furthermore, the Fe atom diffusion suppression layer 12 and copper-based brazing filler metal layer 13 were formed on both sides of the brazing composite members 21A and 31A, but it is only necessary that the Fe atom diffusion suppression layer 12 and copper-based brazing filler metal layer 13 be laminated and formed on at least that side or sides where another member or members are to be brazed. For example, for the brazing composite members used as the material in the set of plate members 21-1 and 21-2 diagrammed in Fig. 12, the Fe atom diffusion suppression layer 12 need only be formed on the side where the partitioning member 22 is brazed.

The brazing composite of the present invention is ideal for use as the material in brazed structures in heat exchangers and the like used in a corrosive atmosphere. The brazed structures and heat exchangers of the present invention have brazing filler metal section that exhibit outstanding corrosion resistance, wherefore they are ideal for use in a high temperature corrosive atmosphere such as exhaust gas.

### Explanation of Symbols

- 1: BRAZING COMPOSITE
- 11: BASE MATERIAL
- 12: Fe ATOM DIFFUSION SUPPRESSION LAYER
- 13: COPPER-BASED BRAZING FILLER METAL LAYER
- 21-1, 21-2: PLATE MEMBERS
- 21A: PLATE-FORM BRAZING COMPOSITE MEMBER
- 31: CONCAVO-CONVEX MEMBER
- 31A: CONCAVO-CONVEX BRAZING COMPOSITE MEMBER

## Claims

1. A brazing composite for use in a heat exchanger comprising:
a base material formed of stainless steel;
a Fe atom diffusion suppression layer, formed of nickel or of a Ni-Cu alloy having a nickel content of 90 wt% or higher with remainder thereof composed essentially of copper, laminated and formed on surface of said base material, for suppressing diffusion of Fe atoms from said base material to brazing filler metal side when members to be joined together being brazed by means of a copper-based brazing filler metal; and
a copper-based brazing filler metal layer formed on said Fe atom diffusion suppression layer; wherein
said base material, said Fe atom diffusion suppression layer, and said copper-based brazing filler metal layer are mutually clad by diffused junction; and
said copper-based brazing filler metal layer is formed of a Cu-Ni alloy having a nickel content of 5 to 10 wt% with remainder thereof composed essentially of copper.

2. The brazing composite according to claim 1, wherein thickness of said Fe atom diffusion suppression layer is 5 µm or greater.

3. A heat exchanger comprising:
plate members deployed in opposition to each other; and
partitioning members that partition spaces formed between said plate members into many partial spaces; wherein
said plate members and said partitioning members are brazed together with a copper-based brazing filler metal; and
said plate members have
a plate-form base material formed of stainless steel; and
a Fe atom diffusion suppression layer or layers formed of nickel or of a Ni-Cu alloy having a nickel content of 90 wt% or higher with remainder thereof composed essentially of copper, laminated and formed on surface or surfaces of said base material, for suppressing diffusion of Fe atoms from said base material to brazing filler metal section when said partitioning members and said plate members being brazed together; and
said copper-based brazing filler metal is formed of a Cu-Ni alloy having a nickel content of 5 to 10 wt% with the remainder composed essentially of copper.

4. A heat exchanger comprising:
a first concavo-convex member wherein first concavities and first convexities are alternately formed; and
a second concavo-convex member deployed in opposition to said first concavo-convex member, wherein second concavities and second convexities are alternately formed; wherein
outer surfaces of said first concavities in said first concavo-convex member and outer surfaces of said second convexities in said second concavo-convex member are brazed together with a copper-based brazing filler metal; and
said first concavo-convex member and said second concavo-convex member each have
a base material formed of stainless steel; and
a Fe atom diffusion suppression layer or layers formed of nickel or of a Ni-Cu alloy having a nickel content of 90 wt% or higher with remainder thereof composed essentially of copper, laminated and formed on surface or surfaces of said base material, for suppressing diffusion of Fe atoms from said base material to brazing filler metal section when said first concavities and said second convexities being brazed together; and
said copper-based brazing filler metal is formed of a Cu-Ni alloy having a nickel content of 5 to 10 wt% with the remainder composed essentially of copper.

5. A brazing composite for use in a heat exchanger comprising:
a base material formed of stainless steel;
a Fe atom diffusion suppression layer, formed of a Ni-Cr alloy having a nickel content of 50 wt% or higher with remainder thereof composed essentially of Cr, laminated and formed on surface of said base material, for suppressing diffusion of Fe atoms from said base material to brazing filler metal side when members to be joined together being brazed by means of a copper-based brazing filler metal; and
a copper-based brazing filler metal layer formed on said Fe atom diffusion suppression layer; wherein
said base material, said Fe atom diffusion suppression layer, and said copper-based brazing filler metal layer are mutually clad by diffused junction; and
said copper-based brazing filler metal layer is formed of a Cu-Ni alloy having a nickel content of 5 to 10 wt% with remainder thereof composed essentially of copper.

6. The brazing composite according to claims 5, wherein thickness of said Fe atom diffusion suppression layer is 5 µm or greater.

7. A heat exchanger comprising:
plate members deployed in opposition to each other; and
partitioning members that partition spaces formed between said plate members into many partial spaces; wherein
said plate members and said partitioning members are brazed together with a copper-based brazing filler metal; and
said plate members have
a plate-form base material formed of stainless steel; and
a Fe atom diffusion suppression layer or layers formed of a Ni-Cr alloy having a nickel content of 50 wt% or higher with remainder thereof composed essentially of Cr, laminated and formed on surface or surfaces of said base material, for suppressing diffusion of Fe atoms from said base material to brazing filler metal section when said partitioning members and said plate members being brazed together; and
said copper-based brazing filler metal is formed of a Cu-Ni alloy having a nickel content of 5 to 10 wt% with the remainder composed essentially of copper.

8. A heat exchanger comprising:
a first concavo-convex member wherein first concavities and first convexities are alternately formed; and
a second concavo-convex member deployed in opposition to said first concavo-convex member, wherein second concavities and second convexities are alternately formed; wherein
outer surfaces of said first concavities in said first concavo-convex member and outer surfaces of said second convexities in said second concavo-convex member are brazed together with a copper-based brazing filler metal; and
said first concavo-convex member and said second concavo-convex member each have
a base material formed of stainless steel; and
a Fe atom diffusion suppression layer or layers formed of a Ni-Cr alloy having a nickel content of 50 wt% or higher with remainder thereof composed essentially of Cr, laminated and formed on surface or surfaces of said base material, for suppressing diffusion of Fe atoms from said base material to brazing filler metal section when said first concavities and said second convexities being brazed together; and
said copper-based brazing filler metal is formed of a Cu-Ni alloy having a nickel content of 5 to 10 wt% with the remainder composed essentially of copper.

## Patentansprüche

1. Lötverbundstoff, der in einem Wärmeaustaucher verwendet wird, umfassend:
ein aus einem rostfreien Stahl gebildetes Basismaterial;
eine Schicht zur Unterdrückung der Diffusion von Fe-Atomen, gebildet aus Nickel oder einer Ni-Cu-Legierung mit einem Nickelgehalt von 90 Gew.-% oder mehr, deren Rest im wesentlichen aus Kupfer besteht, die laminiert und auf der Oberfläche des Basismaterial zur Unterdrückung der Diffusion von Fe-Atomen aus dem Basismaterial in die Seite des Lots gebildet wird, wenn die zu verbindenen Bestandteile miteinander mittels eines auf Kupfer-basierenden Lots verlötet werden; und
eine auf Kupfer-basierende Lotschicht, die auf der Schicht zur Unterdrückung der Fe-Atom Diffuison gebildet ist; wobei
das Basismaterial, die Schicht zur Unterdrückung der Diffusion der Fe-Atome und die auf Kupfer-basierende Lotschicht wechselseitig durch diffundierten Übergang plattiert werden; und
die auf Kupfer-basierende Lotschicht wird aus einer Cu-Ni-Legierung mit einem Nickelgehalt von 5 bis 10 Gew.-%, deren Rest im wesentlichen aus Kupfer besteht, gebildet.

2. Lötverbundstoff nach Anspruch 1, bei dem die Dicke der Schicht zur Unterdrückung der Diffusion der Fe-Atome 5µm oder mehr beträgt.

3. Wärmeaustauscher umfassend:
Plattenelemente, die zu einander gegenüberliegend ausgebreitet sind; und
Unterteilungselemente, die Räume, die zwischen den Plattenelementen gebildet sind, in viele partielle Räume aufteilen; wobei
die Plattenelemente und die Unterteilungselemente miteinander mit einem auf Kupfer-basierenden Lot verlötet sind; und
die Plattenelemente haben
ein plattenförmiges Basismaterial das aus rostfreiem Stahl gebildet ist; und
eine Schicht zur Unterdrückung der Diffusion von Fe-Atomen, gebildet aus Nickel oder einer Ni-Cu-Legierung mit einem Nickelgehalt von 90 Gew.-% oder mehr, deren Rest im wesentlichen aus Kupfer besteht, die laminiert und auf der Oberfläche des Basismaterial zur Unterdrückung der Diffusion von Fe-Atomen aus dem Basismaterial in den Abschnitt des Lots gebildet wird, wenn Unterteilungselemente und die Plattenelemente miteinander verlötet werden; und
die auf Kupfer-basierende Lotschicht wird aus einer Cu-Ni-Legierung mit einem Nickelgehalt von 5 bis 10 Gew.-%, deren Rest im wesentlichen aus Kupfer besteht, gebildet.

4. Wärmeaustauscher umfassend:
ein erstes konkav-konvex Element, bei dem erste Konkavitäten und erste Konvexitäten alternativ gebildet sind; und
ein zweites konkav-konvec Element, das gegenüberliegend dem ersten konkov-konvex Element ausgebreitet ist, wobei zweite Konkavitäten und zweite Konvexitäten alternativ gebildet sind; wobei
die äußeren Oberflächen der ersten Konkavitäten im ersten konkav-konvex Element und die äußeren Oberflächen der zweiten Konvexitäten des zweiten konkav-konvex Elements mit einem auf Kupfer-basierenden Lot miteinander verlötet sind; und
das erste konkav-konvex Element und das zweite konkav-konvex Element haben jeweils
eine aus einem rostfreien Stahl gebildetes Basismaterial;
eine Schicht zur Unterdrückung der Diffusion von Fe-Atomen, gebildet aus Nickel oder einer Ni-Cu-Legierung mit einem Nickelgehalt von 90 Gew.-% oder mehr, deren Rest im wesentlichen aus Kupfer besteht, die laminiert und auf der Oberfläche oder den Oberflächen des Basismaterial zur Unterdrückung der Diffusion von Fe-Atomen aus dem Basismaterial in die Seite des Lots gebildet wird, wenn die ersten Konkavitäten und die zweiten Konvexitäten miteinander verlötet werden; und
die auf Kupfer-basierende Lotschicht wird aus einer Cu-Ni-Legierung mit einem Nickelgehalt von 5 bis 10 Gew.-%, deren Rest im wesentlichen aus Kupfer besteht, gebildet.

5. Lötverbundstoff, der in einem Wärmeaustaucher verwendet wird, umfassend:
ein aus einem rostfreien Stahl gebildetes Basismaterial;
eine Schicht zur Unterdrückung der Diffusion von Fe-Atomen, gebildet aus Nickel oder einer Ni-Cr-Legierung mit einem Nickelgehalt von 50 Gew.-% oder mehr, deren Rest im wesentlichen aus Cr besteht, die laminiert und auf der Oberfläche des Basismaterial zur Unterdrückung der Diffusion von Fe-Atomen aus dem Basismaterial in die Seite des Lots gebildet wird, wenn die zu verbindenen Bestandteile miteinander mittels eines auf Kupfer-basierenden Lots verlötet werden; und
eine auf Kupfer-basierende Lotschicht, die auf der Schicht zur Unterdrückung der Fe-Atom Diffuison gebildet ist; wobei
das Basismaterial, die Schicht zur Unterdrückung der Diffusion der Fe-Atome und die auf Kupfer-basierende Lotschicht wechselseitig durch diffundierten Übergang plattiert werden; und
die auf Kupfer-basierende Lotschicht wird aus einer Cu-Ni-Legierung mit einem Nickelgehalt von 5 bis 10 Gew.-%, deren Rest im wesentlichen aus Kupfer besteht, gebildet.

6. Lötverbundstoff nach Anspruch 5, bei dem die Dicke der Schicht zur Unterdrückung der Diffusion der Fe-Atome 5µm oder mehr beträgt.

7. Wärmeaustauscher umfassend:
Plattenelemente, die zu einander gegenüberliegend ausgebreitet sind; und
Unterteilungselemente, die Räume, die zwischen den Plattenelementen gebildet sind, in viele partielle Räume aufteilen; wobei
die Plattenelemente und die Unterteilungselemente miteinander mit einem auf Kupfer-basierenden Lot verlötet sind; und
die Plattenelemente haben
ein plattenförmiges Basismaterial das aus rostfreiem Stahl gebildet ist; und
eine Schicht zur Unterdrückung der Diffusion von Fe-Atomen, gebildet aus Nickel oder einer Ni-Cr-Legierung mit einem Nickelgehalt von 50 Gew.-% oder mehr, deren Rest im wesentlichen aus Cr besteht, die laminiert und auf der Oberfläche des Basismaterial zur Unterdrückung der Diffusion von Fe-Atomen aus dem Basismaterial in den Abschnitt des Lots gebildet wird, wenn Unterteilungselemente und die Plattenelemente miteinander verlötet werden; und
die auf Kupfer-basierende Lotschicht wird aus einer Cu-Ni-Legierung mit einem Nickelgehalt von 5 bis 10 Gew.-%, deren Rest im wesentlichen aus Kupfer besteht, gebildet.

8. Wärmeaustauscher umfassend:
ein erstes konkav-konvex Element, bei dem erste Konkavitäten und erste Konvexitäten alternativ gebildet sind; und
ein zweites konkav-konvec Element, das gegenüberliegend dem ersten konkov-konvex Element ausgebreitet ist, wobei zweite Konkavitäten und zweite Konvexitäten alternativ gebildet sind; wobei
die äußeren Oberflächen der ersten Konkavitäten im ersten konkav-konvex Element und die äußeren Oberflächen der zweiten Konvexitäten des zweiten konkav-konvex Elements mit einem auf Kupfer-basierenden Lot miteinander verlötet sind; und
das erste konkav-konvex Element und das zweite konkav-konvex Element haben jeweils
eine aus einem rostfreien Stahl gebildetes Basismaterial;
eine Schicht zur Unterdrückung der Diffusion von Fe-Atomen, gebildet aus Nickel oder einer Ni-Cr-Legierung mit einem Nickelgehalt von 50 Gew.-% oder mehr, deren Rest im wesentlichen aus Cr besteht, die laminiert und auf der Oberfläche oder den Oberflächen des Basismaterial zur Unterdrückung der Diffusion von Fe-Atomen aus dem Basismaterial in die Seite des Lots gebildet wird, wenn die ersten Konkavitäten und die zweiten Konvexitäten miteinander verlötet werden; und
die auf Kupfer-basierende Lotschicht wird aus einer Cu-Ni-Legierung mit einem Nickelgehalt von 5 bis 10 Gew.-%, deren Rest im wesentlichen aus Kupfer besteht, gebildet.

## Revendications

1. Composite de brasage utilisé dans un échangeur thermique comprenant :
un matériau de base formé d'acier inoxydable ;
une couche de suppression de diffusion d'atomes de fer, formée de nickel ou bien d'un alliage Ni-Cu avec un pourcentage de nickel en poids de 90 ou plus, le reste étant composé principalement de cuivre, laminé et formé sur la surface dudit matériau de base, pour la diffusion par suppression d'atomes de fer depuis ledit matériau de base vers le métal d'apport lorsque les éléments à joindre sont brasés au moyen d'un métal d'apport pour brasage à base de cuivre, et
une couche de métal d'apport pour brasage à base de cuivre formée sur ladite couche de suppression de diffusion d'atome de fer, dans laquelle
ledit matériau de base, ladite couche de suppression de diffusion d'atomes de fer et ladite couche de métal d'apport pour brasage à base de cuivre sont réciproquement claddées par jonction diffusée ; et
ladite couche de métal d'apport pour brasage à base de cuivre est formée d'un alliage Cu-Ni ayant un contenu de nickel de 5 à 10 %/poids, le reste étant composé principalement de cuivre.

2. Composite de brasage selon la revendication 1, dans lequel l'épaisseur de ladite couche de suppression de diffusion d'atomes de fer est de 5µm ou plus.

3. Echangeur thermique comprenant :
des éléments en forme de plaques déployés en opposition l'un par rapport à l'autre ; et
des éléments qui partitionnent des espaces formés entre lesdits éléments en forme de plaques, en plusieurs espaces partiels ; dans lequel
lesdits éléments en forme de plaques et lesdits éléments de partition sont brasés ensemble en utilisant un métal d'apport pour brasage à base de cuivre; et
lesdits éléments en forme de plaque comportent
un matériau de base en forme de plaque formé d'acier inoxydable ; et
une ou plusieurs couches de suppression de diffusion d'atomes de fer formée(s) de nickel ou d'un alliage Ni-Cu ayant un contenu de nickel de 90 %/poids ou plus, le reste étant principalement composé de cuivre, laminé et formé sur la surface ou sur les surfaces dudit matériau de base, pour la diffusion par suppression des atomes de fer depuis ledit matériau de base vers la partie du métal d'apport pour brasage, lorsque lesdits éléments de partition et lesdits éléments en forme de plaques sont brasés ensemble ; et ledit métal d'apport pour brasage à base de cuivre est formé d'un alliage Cu-Ni ayant un contenu de nickel de 5 à 10 %/poids, le reste étant principalement composé de cuivre.

4. Echangeur thermique comprenant :
un premier élément concavo-convex dans lequel les premières concavités et les premières convexités sont formées alternativement ; et
un second élément concavo-convex déployé en opposition par rapport au premier élément concavo-convex, dans lequel les secondes concavités et les secondes convexités sont formées alternativement ; dans lequel les surfaces externes desdites premières concavités dans ledit premier élément concavo-convex et les surfaces externes desdites secondes convexités dans ledit second élément concavo-convex sont brasées ensemble en utilisant un métal d'apport pour brasage à base de cuivre ; et
ledit premier élément concavo-convex et ledit second élément concavo-convex comportent chacun
un matériau de base formé d'acier inoxydable ; et
une ou plusieurs couches de suppression de diffusion d'atomes de fer formées de nickel ou d'un alliage Ni-Cu avec un contenu de nickel de 90 %/poids ou plus, le reste étant principalement composé de cuivre, laminé et formé sur la surface ou sur les surfaces dudit matériau de base, pour la diffusion par suppression des atomes de fer dudit matériau de base vers la section de métal d'apport pour brasage, lorsque lesdites premières concavités et lesdites secondes convexités sont brasées ensemble ; et
ledit métal d'apport pour brasage à base de cuivre est formé d'un alliage Cu-Ni ayant un contenu de nickel de 5 à 10 %/poids, le reste étant principalement composé de cuivre

5. Composite de brasage utilisé dans un échangeur thermique comprenant :
un matériau de base formé d'acier inoxydable ;
une couche de suppression pour la diffusion d'atomes de fer, formée d'un alliage Ni-Cr avec un pourcentage en poids de 50 de nickel, ou plus, le reste étant composé principalement de Cr, laminé et formé sur la surface dudit matériau de base, pour la diffusion par suppression d'atomes de fer depuis ledit matériau de base vers le métal d'apport lorsque les éléments à joindre sont brasés au moyen d'un métal d'apport pour brasage à base de cuivre, et
une couche de métal d'apport pour brasage à base de cuivre formée sur ladite couche de suppression de diffusion d'atome de fer, dans laquelle
ledit matériau de base, ladite couche de suppression de diffusion d'atome de fer et ladite couche de métal d'apport pour brasage à base de cuivre sont réciproquement claddées par jonction diffusée ; et
ladite couche de métal d'apport pour brasage à base de cuivre est formée d'un alliage Cu-Ni ayant un contenu de nickel de 5 à 10 %/poids, le reste étant composé principalement de cuivre.

6. Composite de brasage selon la revendication 5, dans lequel l'épaisseur de ladite couche de suppression de diffusion d'atome de fer est de 5µm ou plus.

7. Echangeur thermique comprenant :
des éléments en forme de plaques déployés en opposition l'un par rapport à l'autre ; et
des éléments qui partitionnent des espaces formés entre lesdits éléments en forme de plaques, en plusieurs espaces partiels ; dans lequel
lesdits éléments en forme de plaques et lesdits éléments de partition sont brasés ensemble en utilisant un métal d'apport pour brasage à base de cuivre; et
lesdits éléments en forme de plaque comportent
un matériau de base en forme de plaque formé d'acier inoxydable ; et
une ou plusieurs couches de suppression de diffusion d'atomes de fer formée(s) d'un alliage Ni-Cr ayant un contenu de nickel de 50 %/poids ou plus, le reste étant principalement composé de Cr, laminé et formé sur la surface ou sur les surfaces dudit matériau de base, pour la diffusion par suppression des atomes de fer depuis ledit matériau de base vers la partie de métal d'apport pour brasage, lorsque lesdits éléments de partition et lesdits éléments en forme de plaques sont brasés ensemble ; et
ledit métal d'apport pour brasage à base de cuivre est formé d'un alliage Cu-Ni ayant un contenu de nickel de 5 à 10 %/poids, le reste étant principalement composé de cuivre.

8. Echangeur thermique comprenant :
Un premier élément concavo-convex dans lequel les premières concavités et les premières convexités sont formées alternativement ; et
Un second élément concavo-convex déployé en opposition par rapport au premier élément concavo-convex, dans lequel les secondes concavités et les secondes convexités sont formées alternativement ; dans lequel
Les surfaces externes desdites premières concavités dans ledit premier élément concavo-convex et les surfaces externes desdites secondes convexités dans ledit second élément concavo-convex sont brasées ensemble en utilisant un métal d'apport pour brasage à base de cuivre ; et
Ledit premier élément concavo-convex et ledit second élément concavo-convex comportent chacun
un matériau de base formé d'acier inoxydable ; et
une ou plusieurs couches de suppression de diffusion d'atomes de fer formées d'un alliage Ni-Cr avec un contenu de nickel de 50 %/poids ou plus, le reste étant principalement composé de Cr, laminé et formé sur la surface ou sur les surfaces dudit matériau de base, pour la diffusion par suppression des atomes de fer dudit matériau de base vers la section de métal d'apport pour brasage, lorsque lesdites premières concavités et lesdites secondes convexités sont brasées ensemble ; et
ledit métal d'apport pour brasage à base de cuivre est formé d'un alliage Cu-Ni ayant un contenu de nickel de 5 à 10 %/poids, le reste étant principalement composé de cuivre.
